# EUROPEAN PATENT SPECIFICATION

(11) **EP 3 628 850 B1**
(45) Date of publication and mention of the grant of the patent: **13.10.2021**
(21) Application number: 19210191.3
(22) Date of filing: 09.02.2016
(51) Int. Cl.: F02C 7/32, F16H 1/22, F02K 3/06

(54) **GEARBOX FOR GAS TURBINE ENGINE**
GETRIEBE FÜR GASTURBINENMOTOREN
TRANSMISSION POUR MOTEUR DE TURBINE À GAZ

(30) Priority: 09.02.2015 US 201514617428
(43) Date of publication of application: 01.04.2020
(62) Divisional of application: 16154906.8
(73) Proprietor: Raytheon Technologies Corporation, Farmington, CT 06032 (US)
(72) Inventor: DUONG, Hung, Unionville, CT Connecticut 06085 (US); SNAPE, Nathan, Tolland, CT Connecticut 06084 (US)
(74) Representative: Dehns

(56) References cited:
- EP-A2- 2 535 544
- WO-A1-2014/120134
- US-A1- 2009 232 640
- US-A1- 2013 047 623
- US-A1- 2014 020 506

## Description

### BACKGROUND

This disclosure relates to a gearbox for a gas turbine engine and the arrangement of this gearbox relative to the engine.

A typical gas turbine engine for an aircraft includes an accessory drive gearbox. The gearbox is rotationally coupled to at least one spool of the engine by a tower shaft. In one configuration, the gearbox is mounted adjacent to an engine core and enclosed by a core nacelle surrounding the engine core.

It is desirable to provide a compact gearbox configuration, which more easily packages within the space between the core nacelle and engine core. One example gearbox configuration utilizes an arcuate shaped gearbox assembly with all of the gears within the gearbox parallel to one another. The rotational axes of the gears and the accessory drive components are arranged in the same direction as the axis of the engine.

Another gearbox configuration provides a U-shaped housing that is arranged at the bottom of the engine core. The accessory drive component axes are arranged in a generally radial orientation with respect to the engine axis.

A prior art gearbox having the features of the preamble of claim 1 is disclosed in US 2009/232640 A1. Further prior art gearboxes are disclosed in EP 2 535 544 A2 and US 2014/020506 A1.

### SUMMARY

In one aspect of the present invention, a gearbox for a gas turbine engine is provided as set forth in claim 1.

In a further embodiment of any of the above, all of the shaft portions are parallel with one another.

In a further embodiment of any of the above, the multiple drive gears are in the same plane.

In a further embodiment of any of the above, accessory drive components include at least two of an air turbine starter, a deoiler, a variable frequency generator, a permanent magnet alternator, a fuel pump, a lubrication pump and a hydraulic pump. At least two of the accessory drive components are configured to be rotationally driven by the multiple drive gears. One of at least two of the accessory drive components are mounted to the first mounting surface. The other of at least two accessory drive components is mounted to the second mounting surface.

In a further embodiment of any of the above, at least two accessory drive components are the air turbine starter and the deoiler.

In a further embodiment of any of the above, at least two accessory drive components are the variable frequency generator and the permanent magnet alternator.

In a further embodiment of any of the above, at least two accessory drive components are the fuel pump and the lubrication pump.

In a further embodiment of any of the above, the input gear shaft is coupled to a gear set that is connected to the drive gear. The gear set includes a bevel gear.

In a further embodiment of any of the above, the first and second mounting surfaces are parallel to one another.

### BRIEF DESCRIPTION OF THE DRAWINGS

The disclosure can be further understood by reference to the following detailed description when considered in connection with the accompanying drawings wherein:
Figure 1A schematically illustrates a gas turbine engine embodiment.
Figure 1B is a cross-sectional view of the gas turbine engine shown in Figure 1 with a nacelle opened to service to an accessory drive gearbox and its accessory drive components.
Figure 2 is side view of the gearbox mounted to the engine.
Figure 3A is a bottom perspective view of the gearbox.
Figure 3B is a right side view of the gearbox.
Figure 3C is a left side view of the gearbox with covers removed, illustrating multiple gear sets within the gearbox housing.
Figure 4 is a perspective schematic view of a gear train within a gearbox housing.
Figure 5 is a schematic view of an example drive gear supported by bearings within the gearbox.

### DETAILED DESCRIPTION

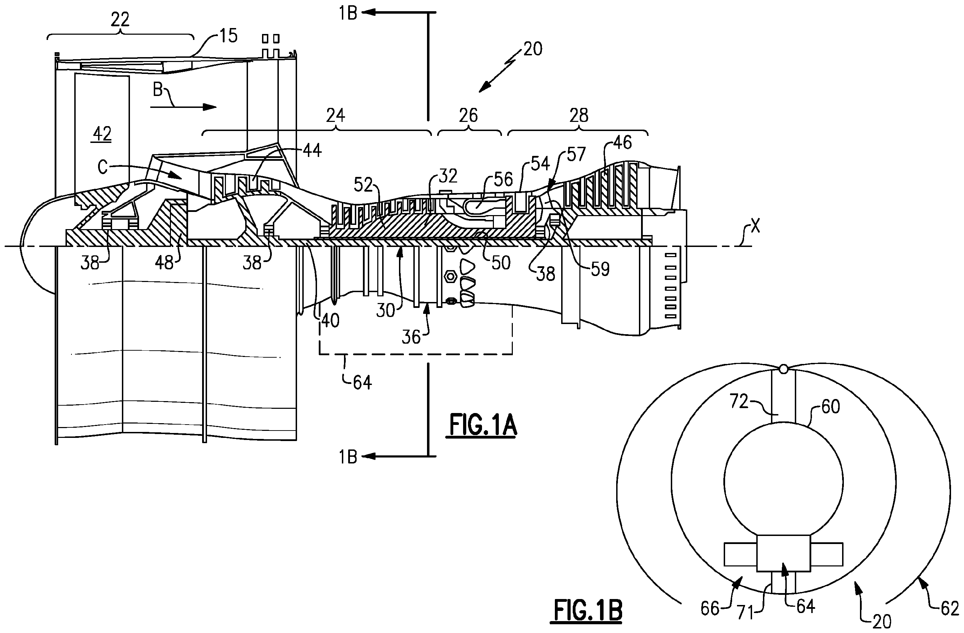

Figure 1A schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct at least partially defined within a fan case 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 (2.3:1) and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3 (2.3:1). It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

Referring to Figure 1B, a schematic view of the engine is shown in which the accessory drive gearbox 64 and its accessory drive component 66 may be serviced. The gearbox 64 is mounted to the core 60. An outer nacelle 62, which is mounted in a clam shell configuration about the engine core, may be opened to provide access to the components 66.

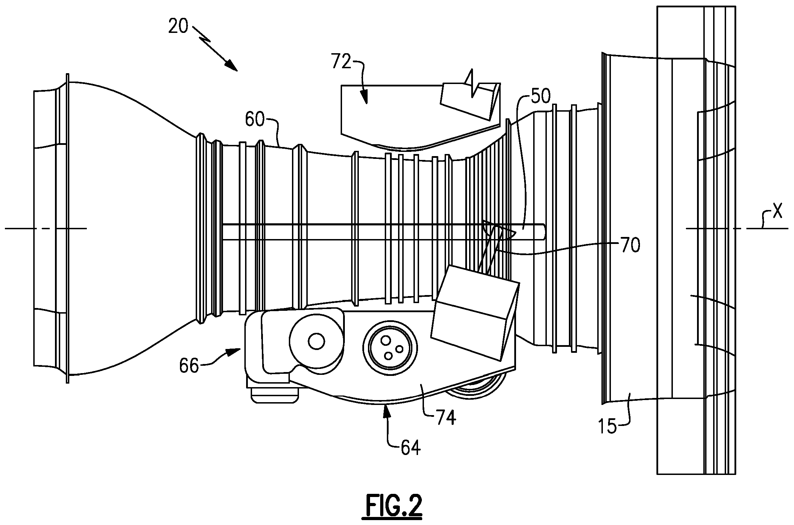

As best seen in Figure 2, the gearbox 64 is oriented longitudinally in the direction of the engine axis X. In one example embodiment, the gearbox 64 is arranged at the six o'clock position at the lower bifurcation 71, which is directly opposite the upper bifurcation 72 arranged at the twelve o'clock position (see also Figure 1B).

Returning to Figure 2, a tower shaft 70 couples the gearbox 64 to an outer shaft 50 to transmit the high speed location of the high spool to the gearbox 64. In the example embodiment, the gearbox 64 receives rotational drive from only the high spool, although the gearbox may be powered by both low and high spools or only the low spool in other embodiments, if desired.

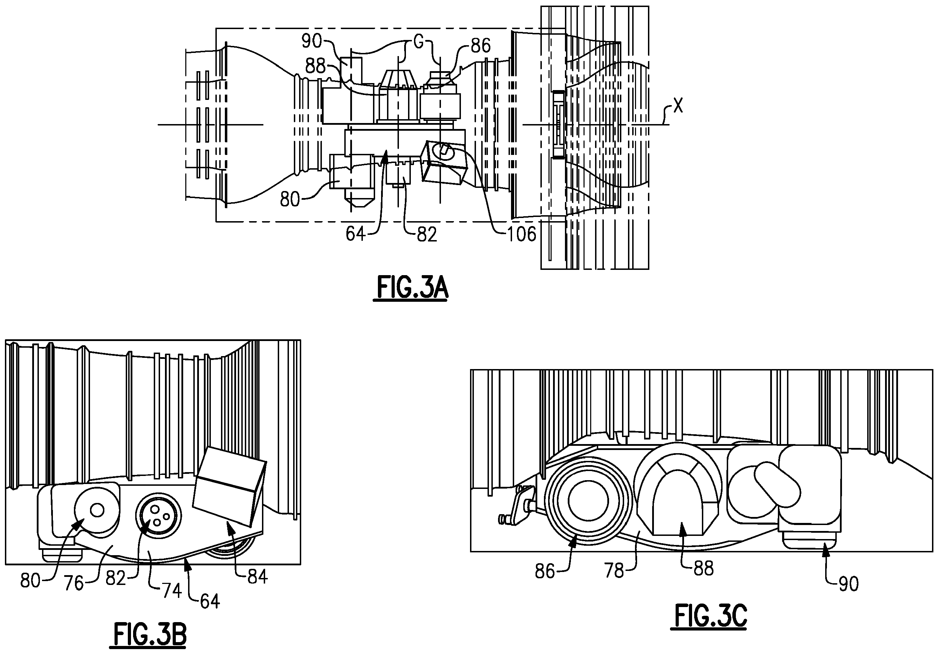

Referring to Figures 3A-3C, the gearbox 64 includes a housing 74 providing first and second mounting surfaces 76, 78. The first and second mounting surfaces 76, 78 are parallel to one another in the example embodiment. A fuel pump 80, a permanent magnet alternator (PMA) 82, and a deoiler 84 are mounted to the first mounting surface 76. An air turbine starter (ATS) 86, a variable frequency generator (VFG) 88, and a lubrication pump 90 are mounted to the second mounting surface 78. Different or additional components may also be mounted to the housing 74, such as a hydraulic pump. The accessory drive components 66 have rotational axes G that are perpendicular to the engine axis X.

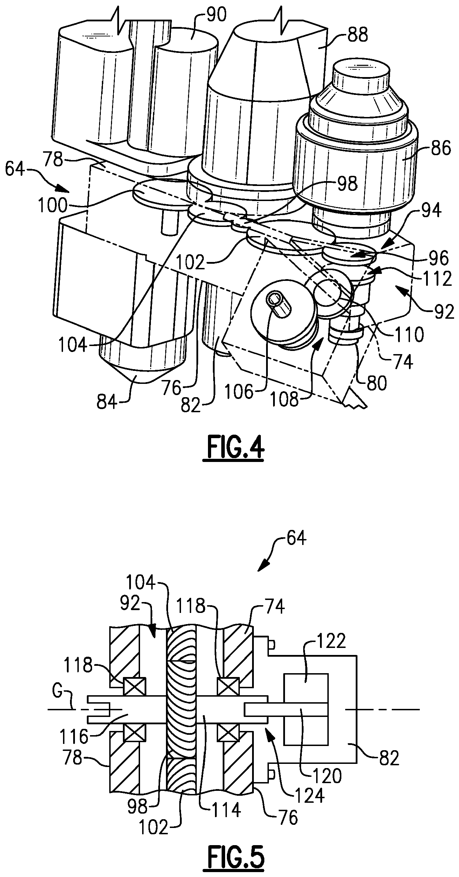

Referring to Figures 4 and 5, the housing 74 includes a cavity 92 within which a gear train 94 is arranged. The gear train 94 includes first, second and third drive gears 96, 98, 100. The first and second idler gears 102, 104 are interconnected between the first, second and third drive gears 96, 98, 100 to provide spacing between the drive gears to permit sufficient space for mounting the components 66 to the housing 74. Additionally, the idlers may provide a desired gear reduction between the drive gears.

In the example, the drive gears 96, 98, 100 are in the same plane with one another as well as with the idler gears 102, 104, which provides a compact package that is more easily accommodated in the nacelle 62.

A gear set 108 is provided between the input gear shaft 106 and the gear train 94. In the example, the gear set 108 includes a first bevel gear 110 that drives a second bevel gear 112 coupled to the first drive gear 96. The gear set 108 may be used to obtain the desired speed for the gearbox 64. Additionally, the shaft angle of the first and second bevel gears 110, 112 can be adjusted and their position changed to locate the gearbox 64 to a desired position and orientation with respect to the core 60.

Each drive gear is connected to first and second shaft portions 114, 116 that are coaxial with one another and its respective drive gear (second drive gear 98 shown in Figure 5 example). The first and second shaft portions 114, 116 are supported by a bearing 118 with respect to the housing 74. Each component 66 includes a component shaft 120 coupled to a driven element 122. A splined connection 124 connects the component shaft 120 to one of the shaft portions 114, 116.

An accessory drive component 66 is mounted to each side of the housing 74 and is driven by a common drive gear. That is, one component is driven by each of the first and second shaft portions 114, 116, which enables a pair of accessory drive components to be driven by a single drive gear. The components are a matched to one another based on a desired drive speed for the components. For example, the deoiler 84 and ATS 86 are driven by a common gear, the VFG 88 and PMA 82 are driven by a common gear, and the fuel pump 80 and the lubrication pump 90 are driven by a common gear.

The disclosed gearbox has one gear train to drive the components. The accessory drive components are mounted to the gearbox in a perpendicular orientation, which improves packaging. With the accessory drive component in the disclosed configuration, the length of external lines to and from these components may be reduced by 20-30%, for example. The position and orientation of the components 66 also improves accessibility with respect to the nacelle 62 during service.

It should also be understood that although a particular component arrangement is disclosed in the illustrated embodiment, other arrangements will benefit herefrom. Although particular step sequences are shown, and described, it should be understood that steps may be performed in any order, separated or combined unless otherwise indicated and will still benefit from the present invention.

Although the different examples have specific components shown in the illustrations, embodiments of this invention are not limited to those particular combinations.

Although an example embodiment has been disclosed, a worker of ordinary skill in this art would recognize that certain modifications would come within the scope of the claims. For that reason, the following claims should be studied to determine their true scope and content.

## Claims

1. A gearbox (64) for a gas turbine engine (20) comprising:
a housing (74) that includes a cavity (92) provided between opposing first and second mounting surfaces (76, 78);
an input gear shaft (106) coupled to a drive gear (96, 98, 100), the drive gear (96, 98, 100) connected to first and second shaft portions (114, 116) that respectively extend to the first and second mounting surfaces (76, 78), wherein the first and second shaft portions (114, 116) and the drive gear (96, 98, 100) are coaxial with one another;
a gear train (94) having multiple drive gears (96, 98, 100) that includes the drive gear (96, 98, 100), wherein each of the multiple drive gears (96, 98, 100) have first and second shaft portions (114, 116) coaxial with one another and their respective drive gear (96, 98, 100), the multiple drive gears (96, 98, 100) include first, second and third drive gears (96, 98, 100), the first drive gear (96) corresponds to the drive gear, and the gear train (94) includes a first idler gear (102) coupling at least two of the multiple drive gears (96, 98, 100),
**characterized in that**:
the gear train (94) includes a second idler gear (104), the first and second idler gears (102, 104) arranged in alternating relationship with the first, second and third drive gears (96, 98, 100).

2. The gearbox according to claim 1, wherein all of the shaft portions (114, 116) are parallel with one another.

3. The gearbox according to claim 1 or 2, wherein the multiple drive gears (96, 98, 100) are in the same plane.

4. The gearbox according to claim 1, 2 or 3, comprising accessory drive components (66) that include at least two of an air turbine starter (86), a deoiler (84), a variable frequency generator (88), a permanent magnet alternator (82), a fuel pump (80), a lubrication pump (90) and a hydraulic pump, the at least two of the accessory drive components (66) configured to be rotationally driven by the multiple drive gears (96, 98, 100), one of the at least two of the accessory drive components (66) mounted to the first mounting surface (76), and the other of the at least two accessory drive components (66) mounted to the second mounting surface (78).

5. The gearbox according to claim 4, wherein the at least two accessory drive components (66) are:
the air turbine starter (86) and the deoiler (84);
the variable frequency generator (88) and the permanent magnet alternator (82); or
the fuel pump (80) and the lubrication pump (90).

6. The gearbox according to any preceding claim, wherein the input gear shaft (106) is coupled to a gear set (108) that is connected to the drive gear (96, 98, 100), and the gear set (108) includes a bevel gear (110).

7. The gearbox according to any preceding claim, wherein the first and second mounting surfaces (76, 78) are parallel to one another.

8. A gas turbine engine (20) comprising a high spool (32) and the gearbox of any preceding claim, wherein the gearbox (64) receives rotational drive from the high spool (32).

## Patentansprüche

1. Getriebe (64) für ein Gasturbinentriebwerk (20), umfassend:
ein Gehäuse (74), das einen Hohlraum (92) beinhaltet, der zwischen der gegenüberliegenden ersten und zweiten Montagefläche (76, 78) bereitgestellt ist;
eine Eingangszahnradwelle (106), die an ein Antriebszahnrad (96, 98, 100) gekoppelt ist, wobei das Antriebszahnrad (96, 98, 100) mit dem ersten und dem zweiten Wellenabschnitt (114, 116) verbunden ist, die sich jeweils zu der ersten und der zweiten Montagefläche (76, 78) erstrecken, wobei der erste und der zweite Wellenabschnitt (114, 116) und das Antriebszahnrad (96, 98, 100) koaxial zueinander liegen;
ein Räderwerk (94) mit mehreren Antriebszahnrädern (96, 98, 100), das das Antriebszahnrad (96, 98, 100) beinhaltet, wobei jedes der mehreren Antriebszahnräder (96, 98, 100) einen ersten und einen zweiten Wellenabschnitt (114, 116) aufweist, die koaxial zueinander und zu ihrem jeweiligen Antriebszahnrad (96, 98, 100) liegen, wobei die mehreren Antriebszahnräder (96, 98, 100) ein erstes, ein zweites und ein drittes Antriebszahnrad (96, 98, 100) beinhalten, wobei das erste Antriebszahnrad (96) dem Antriebszahnrad entspricht und das Räderwerk (94) ein erstes Zwischenzahnrad (102) beinhaltet, das mindestens zwei der mehreren Antriebszahnräder (96, 98, 100) koppelt,
**dadurch gekennzeichnet, dass**:
das Räderwerk (94) ein zweites Zwischenzahnrad (104) beinhaltet, wobei das erste und das zweite Zwischenzahnrad (102, 104) abwechselnd mit dem ersten, dem zweiten und dem dritten Antriebszahnrad (96, 98, 100) angeordnet sind.

2. Getriebe nach Anspruch 1, wobei alle der Wellenabschnitte (114, 116) parallel zueinander liegen.

3. Getriebe nach Anspruch 1 oder 2, wobei die mehreren Antriebszahnräder (96, 98, 100) auf derselben Ebene liegen.

4. Getriebe nach Anspruch 1, 2 oder 3, umfassend Nebenaggregatantriebskomponenten (66), die mindestens zwei von einem Luftturbinenstarter (86), einem Ölabscheider (84), einem Generator (88) mit variabler Frequenz, einem Permanent-Magnet-Wechselstromerzeuger (82), einer Kraftstoffpumpe (80), einer Schmiermittelpumpe (90) und einer Hydraulikpumpe beinhalten, wobei mindestens zwei der Nebenaggregatantriebskomponenten (66) dazu konfiguriert sind, drehend durch die mehreren Antriebszahnräder (96, 98, 100) angetrieben zu werden, wobei eine der mindestens zwei Nebenaggregatantriebskomponenten (66) an die erste Montagefläche (76) montiert ist und die andere der mindestens zwei Nebenaggregatantriebskomponenten (66) an die zweite Montagefläche (78) montiert ist.

5. Getriebe nach Anspruch 4, wobei die mindestens zwei Nebenaggregatantriebskomponenten (66) Folgendes sind:
der Luftturbinenstarter (86) und der Ölabscheider (84);
der Generator (88) mit variabler Frequenz und der Permanent-Magnet-Wechselstromerzeuger (82); oder
die Kraftstoffpumpe (80) und die Schmiermittelpumpe (90).

6. Getriebe nach einem der vorangehenden Ansprüche, wobei die Eingangszahnradwelle (106) an einen Zahnradsatz (108) gekoppelt ist, der mit dem Antriebszahnrad (96, 98, 100) verbunden ist, und der Zahnradsatz (108) ein Kegelzahnrad (110) beinhaltet.

7. Getriebe nach einem der vorangehenden Ansprüche, wobei die erste und die zweite Montagefläche (76, 78) parallel zueinander liegen.

8. Gasturbinentriebwerk (20), umfassend eine hohe Spule (32) und das Getriebe nach einem der vorhergehenden Ansprüche, wobei das Getriebe (64) einen Drehantrieb von der hohen Spule (32) empfängt.

## Revendications

1. Transmission (64) pour un moteur à turbine à gaz (20) comprenant :
un boîtier (74) qui comporte une cavité (92) prévue entre des première et seconde surfaces de montage (76, 78) opposées ;
un arbre d'engrenage d'entrée (106) couplé à un engrenage d'entraînement (96, 98, 100), l'engrenage d'entraînement (96, 98, 100) étant relié à des première et seconde parties d'arbre (114, 116) qui s'étendent respectivement vers les première et seconde surfaces de montage (76, 78), dans laquelle les première et seconde parties d'arbre (114, 116) et l'engrenage d'entraînement (96, 98, 100) sont coaxiaux entre eux ;
un train d'engrenages (94) ayant de multiples engrenages d'entraînement (96, 98, 100) qui comporte l'engrenage d'entraînement (96, 98, 100), dans laquelle chacun des multiples engrenages d'entraînement (96, 98, 100) a des première et seconde parties d'arbre (114, 116) coaxiaux entre eux et entre leur engrenage d'entraînement respectif (96, 98, 100), les multiples engrenages d'entraînement (96, 98, 100) comportent des premier, deuxième et troisième engrenages d'entraînement (96, 98, 100), le premier engrenage d'entraînement (96) correspond à l'engrenage d'entraînement, et le train d'engrenages (94) comporte un premier engrenage baladeur (102) couplant au moins deux des multiples engrenages d'entraînement (96, 98, 100),
**caractérisée en ce que** :
le train d'engrenages (94) comporte un second engrenage baladeur (104), les premier et second engrenages baladeurs (102, 104) étant disposés en relation alternée avec les premier, deuxième et troisième engrenages d'entraînement (96, 98, 100).

2. Transmission selon la revendication 1, dans laquelle toutes les parties d'arbre (114, 116) sont parallèles les unes aux autres.

3. Transmission selon la revendication 1 ou 2, dans laquelle les multiples engrenages d'entraînement (96, 98, 100) sont dans le même plan.

4. Transmission selon la revendication 1, 2 ou 3, comprenant des composants d'entraînement d'accessoires (66) qui comportent au moins deux éléments parmi un démarreur à turbine à air (86), un déshuileur (84), un générateur à fréquence variable (88), un alternateur à aimants permanents (82), une pompe à carburant (80), une pompe de lubrification (90) et une pompe hydraulique, les au moins deux des composants d'entraînement d'accessoires (66) étant configurés pour être entraînés en rotation par les multiples engrenages d'entraînement (96, 98, 100), l'un des au moins deux des composants d'entraînement d'accessoires (66) étant monté sur la première surface de montage (76), et l'autre des au moins deux composants d'entraînement d'accessoires (66) étant monté sur la seconde surface de montage (78).

5. Transmission selon la revendication 4, dans laquelle les au moins deux composants d'entraînement d'accessoires (66) sont :
le démarreur de turbine à air (86) et le déshuileur (84) ;
le générateur à fréquence variable (88) et l'alternateur à aimants permanents (82) ; ou
la pompe à carburant (80) et la pompe de lubrification (90) .

6. Transmission selon une quelconque revendication précédente, dans laquelle l'arbre d'engrenage d'entrée (106) est couplé à un ensemble d'engrenages (108) qui est connecté à l'engrenage d'entraînement (96, 98, 100), et l'ensemble d'engrenages (108) comporte un engrenage conique (110).

7. Transmission selon une quelconque revendication précédente, dans laquelle les première et seconde surfaces de montage (76, 78) sont parallèles l'une à l'autre.

8. Moteur à turbine à gaz (20) comprenant une bobine haute (32) et la transmission selon une quelconque revendication précédente, dans lequel la transmission (64) reçoit un entraînement en rotation depuis la bobine haute (32).
